# EUROPEAN PATENT SPECIFICATION

(11) **EP 0 554 457 B1**
(45) Date of publication and mention of the grant of the patent: **20.10.1999**
(21) Application number: 92916119.8
(22) Date of filing: 27.07.1992
(51) Int. Cl.: C01B 13/11

(54) **PLATE-SHAPED OZONIZER**
PLATTENFÖRMIGER OZONERZEUGER
OZONEUR EN FORME DE PLAQUE

(30) Priority: 08.08.1991 JP 22456891
(43) Date of publication of application: 11.08.1993
(73) Proprietor: SUMITOMO PRECISION PRODUCTS COMPANY LIMITED, Amagasaki-shi, Hyogo Prefecture 660 (JP)
(72) Inventor: YUKOMI, Tetsusuke, 31-16, Kita-ochiai 4-chome, Hyogo 654-01 (JP)
(74) Representative: Wächtershäuser, Günter, Prof. Dr.
(86) International application number: PCT/JP92/00960
(87) International publication number: WO 93/02959

(56) References cited:
- DE-B- 1 090 186
- FR-A- 1 382 012
- JP-A- 1 096 001
- JP-A- 53 058 989

## Description

### Background of the Invention

FR-A-138 2012 discloses a plate-shaped ozonizer wherein the pressurized gas inside the vessel is the same as the gas being reacted in the ozonizer.

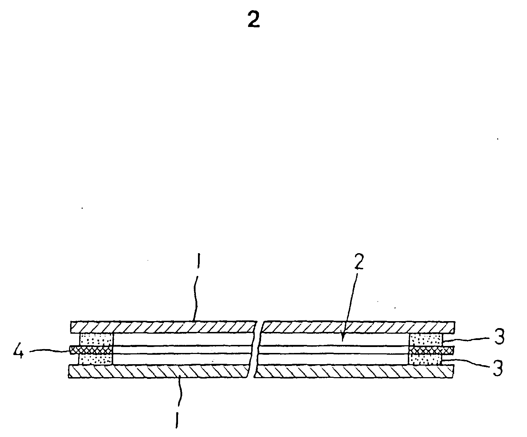

Discharging cells used in a plate-type ozonizer have a construction that two pieces of electrode 1, 1 are oppositely arranged to form a discharging gap 2 therebetween, whereby ozonizing raw material gases, such as air and oxygen, supplied to said discharging gap 2, as shown in Fig. 2. Each electrode 1 comprises a metallic plate and a dielectric coated on a surface of said metallic plate and a thickness of said dielectric is reduced to about 1.0 mm so that it may not become a resistance for heat transfer. And, a plurality of said discharging cells are built up with putting a cooling member called a heat sink therebetween to form said plate-type ozonizer having an appointed capacity. Reference numeral 3 designates a picture frame-shaped packing for forming the discharging gap 2 between the electrodes 1, 1 and reference numeral 4 designates an insulating separator.

With such the plate-type ozonizer, the discharging gaps 2 of the discharging cells can be uniformly kept narrow, so that a discharging can be achieved at a low voltage. In addition, the electrodes 1, 1 can be easily large-sized and cooled. Accordingly, the plate-type ozonizer having the above described construction is more suitable for a generation of high-concentration ozone as compared with a tube-type ozonizer and the like.

However, even if it is intended to generate a high-concentration and high-pressure ozone gas by such the plate-type ozonizer, a problem occurs in that an ozone-generating efficiency is reduced.

That is to say, in order to generate said high-concentration and high-pressure ozone gas by the plate-type ozonizer, a considerable electrode area and a pressure of said raw material gases corresponding to a pressure required of the ozone gas are necessary. However, the thin electrodes 1, 1 are apt to be deformed when large-sized and if an internal pressure of the discharging gap 2 is increased under such the condition, a large strain is produced. As the result, a uniformity of the discharging gap cannot be kept and thus said ozone-generating efficiency is reduced.

It is thought that an enhancement of support member for the electrodes 1, 1 is effective for solving this problem. However, this countermeasure leads to not only a large-sizing of support member but also applying a large tightening force to said packing 3 of the discharging cell 3 which cause a reduction of the packing 3 in reliability. Accordingly, it is not preferable to suppress a deformation of the electrodes 1, 1 by a mechanical reinforcement and thus actually a reduction of said ozone-generating efficiency due to said deformation of the electrodes 1, 1 is unevitable.

Furthermore, in order to generate the high-concentration ozone gas used in an apparatus for producing semiconductors, it is necessary to strongly cool a cooler with a liquid. However, if a temperature of said cooler is extremely reduced, it dews. Since a high voltage is applied to the discharging cell, this dewing causes a poor insulation.

It is an object of the present invention to provide a plate-type ozonizer having large-sized discharging cells and capable of surely preventing said discharging cells from being deformed without reinforcing them even in the case where an internal pressure of the discharging cells is high.

It is another object of the present invention to provide a plate-type ozonizer having no possibility of dewing even in the case where the discharging cells are strongly cooled.

### Disclosure of the Invention

The present invention provides a plate-shaped ozonizer comprising an ozone generator body, with discharge cells located between each two of laminated coolers, for conducting ozonization by circulating the material gas through the inside of each discharge cell, a pressure vessel housing said ozone generator body, and a means for feeding into said pressure vessel a pressurized gas at nearly the same pressure as that of the material gas fed into each discharge cell of the ozone generator body, said ozonizer being characterized in that the inside of each discharge cell of the ozone generator body housed inside the aforementioned pressure vessel forms an independent space isolated from the inside of the pressure vessel, that the material gas to generate ozone is fed into this independent space only, and that the pressurized gas fed into the inside of the pressure vessel is not allowed to infiltrate into this independent space.

Since a differential pressure between an inside and an outside of the discharging cell in the ozonizer body is reduced, a deformation of the discharging cells can he suppressed even though an internal pressure of the discharging cells is heightened in the case where the discharging cells are large-sized and thus apt to be deformed. It is desired to use a dry gas having a dew point lower than that of a coolant for the discharging cells as said pressurized gas to be supplied to said inside of the pressure vessel.

In said plate-type ozonizer according to the present invention, said deformation of the discharging cells can be suppressed by reducing said differential pressure between said inside and said outside of the discharging cell and thus a uniformity of discharging gaps can be kept in the above described manner, so that an ozone-generating efficiency is not reduced even though the discharging cells are large-sized or supplied with high-pressure raw material gases. Accordingly, a high-concentration and high-pressure ozone gas can be generated in high efficiency.

Besides, mechanical means, such as reinforcement, is not adopted for suppressing the deformation of the discharging cells, so that not only a large-sizing of support members can be avoided but also a tightening force for the discharging cells is not increased and thus an unreasonable force for securing said discharging gaps is not applied to gaskets, so that also said gaskets can be improved in durability and reliability.

If said dry gas is used as the pressurized gas, also a reduction of insulation due to the dewing can be prevented and thus the cooling capacity can be improved, so that also a concentration of the ozone gas can be increased.

### Simple Description of the Drawings

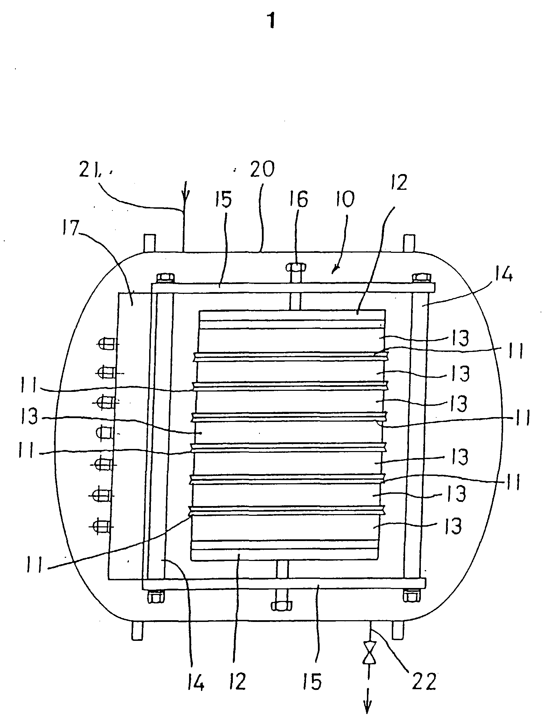

Fig. 1 is a side view schematically showing one preferred embodiment of a plate-type ozonizer to which the present invention was applied; and
Fig. 2 is a sectional view showing a construction of discharging cells.

### Description of the Preferred Embodiments

The preferred embodiments of the present invention will be below dsecribed with reference to the drawings.

A plate-type ozonizer according to the present invention is provided with an ozonizer body 10 comprising a plurality of plate discharging cells 11 and a pressure vessel 20 for housing said ozonizer body 10 therein.

In the ozonizer body 10, a plurality of said discharging cells 11 are built up under the condition that a cooler 13 is put between two pieces of support plate 12, 12 to be supported by holding them by means of bolts 16, 16 between two pieces of end plate 15, 15 connected with each other by means of a rod 14.

The respective discharging cells 11 are liquid-cooled together with both electrodes 1, 1 (refer to Fig. 2) by means of said coolers 13, 13. Pure water or an insulating oil is circulated through the cooler 13 in order to electrically insulate both electrodes 1, 1. Raw material gases are supplied to a gap between both electrodes 1, 1 in the respective discharging cells 11 through a manifold 17 at an appointed pressure.

Said pressure vessel 20 supports the ozonizer body 10 therein by means of support members (not shown). An inside of the pressure vessel 20 is supplied with a pressurized gas through an upper inlet pipe 21. Said pressurized gas within the pressure vessel 20 is held at a pressure same as an internal pressure of the respective discharging cells 11 and discharged little by little through a lower outlet pipe 22. Said raw material gases are sent to said manifold 17 through an exclusive gas pipe not so as to be mixed with the pressurized gas within the pressure vessel 20 and also an ozone gas discharged from the respective discharging cells 11 is introduced out of the pressure vessel 20 through said exclusive gas pipe similarly.

It is desired that the pressurized gas has a dried degree not dewing on a surface of the cooler 13 and inexpensive instrumentation air is used as the pressurized gas. In addition, also SF₆, N₂ and the like having a high electrical insulation are desirably used as the pressurized gas.

Air, oxygen and the like are used as the raw material gases but oxygen is required in order to increase a concentration of ozone to be generated.

In said plate-type ozonizer according to the present invention, a pressure within the discharging cell 11, that is a pressure between both electrodes 1, 1, is made equal to a pressure within the pressure vessel 20 not to produce a differential pressure between an inside and an outside of the discharging cell, so that both electrodes 1, 1 of the discharging cell 11 are not deformed and thus a uniformity of a discharging gap is kept even in the case where the discharging cell 11 is large-sized and said inside of the discharging cell 11 is supplied with high-pressure raw material gases. Accordingly, a high-concentration and high-pressure ozone gas can be efficiently generated.

In addition, since said uniformity of said discharging gap is kept, the discharging gap can be reduced, whereby increasing said concentration of ozone. A relation between the discharging gap and the resulting concentration of ozone is shown in Table 1. The uniformity of the discharging gap can be kept even though its width is about 0.5 mm.

**Table 1**

| Discharging gap | Resulting concentration of ozone |
|---|---|
| 0.9 mm | 180 mg/ℓ |
| 0.6 mm | 230 mg/ℓ |
| 0.5 mm | 250 mg/ℓ |

One piece of electrode in the discharging cell has an area of 300 to 2,000 cm².

Since the pressurized gas within the pressure vessel 20 is discharged little by little, in the case where the raw material gases and/or the ozone gas are leaked out of the ozonizer body 10, the leaked gases are mixed with the pressurized gas to be discharged out of the pressure vessel 20. Accordingly, a leakage of the raw material gases can be automatically detected by an instrumental analysis of an exhaust gas. Although also the raw material gases (oxygen, superdried air and the like) can be used as the pressurized gas, it becomes difficult to detect said leakage of the raw material gases from the ozonizer body 10 in that case.

The results in the case where the ozone gas was actually generated by the use of the plate-type ozonizer according to the present invention are shown in Table 2. In the case where the inside of the pressure vessel 20 is not pressurized, the concentration of ozone generated amounts to 122 g - O₃/Nm³, while, in the case where a pressure corresponding to that of the raw material gases is applied to the inside of the pressure vessel 20, the concentration of ozone generated amounts to 132 g - O₃/Nm³, that is rises by 8 % or more. Since there is no change in conditions excepting the pressurizing, it seems that this improvement of ozone-generating efficiecy results from an impropvement of the discharging gaps in uniformity by the pressurizing. In addition, 6 pieces of discharging cell were used and a surface area of electrodes of 1,800 cm² was selected.

**Table 2**

| | Present invention | Comparative example |
|---|---|---|
| Raw material gases | Oxygen | Oxygen |
| Pressure of raw material gases | 1.0 kgf/cm² | 1.0 kgf/cm² |
| Pressurized gas | Instrumental air | - |
| Dew point of pressurized gas | - 5°C | - |
| Temperature of coolant | 15 °C | 15 °C |
| Concentration of ozone generated | 132 g - O₃/Nm³ | 122 g - O₃/Nm³ |

The ozone-generating efficiency is expressed by a quantity of ozone generated/a quantity of electric power used. The conventional improvement of efficiency had been made mainly in respect of reducing a total energy required for the generation of ozone by reducing an electric energy required for the generation of ozone. However, the resulting improvement amounted to merely at most about 10 to 15 % for the last 10 to 15 years. According to the present invention, this ozone-generating efficiency can be improved by 5 to 10 % at a single stroke. That is to say, a very great effect can be achieved.

### Industrial Availability

Since the plate-type ozonizer according to the present invention can efficiently generate the high-concentration arid high-pressure ozone gas, it can be used in the TEOS-CVD apparatus requiring the high-concentration and high-pressure ozone of the apparatus for producing semiconductors. In addition, it can be suitably used also in the field of bleaching pulps requiring the high-concentration and large-volume ozone and the reduced quantity of electric power consumed.

## Claims

1. A plate-shaped ozonizer comprising an ozone generator body, with discharge cells located between each two of laminated coolers, for conducting ozonization by circulating the material gas through the inside of each discharge cell, a pressure vessel housing said ozone generator body, and a means for feeding into said pressure vessel a pressurized gas at nearly the same pressure as that of the material gas fed into each discharge cell of the ozone generator body, said ozonizer being characterized in that the inside of each discharge cell of the ozone generator body housed inside the aforementioned pressure vessel forms an independent space isolated from the inside of the pressure vessel, that the material gas to generate ozone is fed into this independent space only, and that the pressurized gas fed into the inside of the pressure vessel is not allowed to infiltrate into this independent space.

2. The plate-shaped ozone generator according to Claim 1, characterized in that the aforementioned pressurized gas is a dry gas having a dew point lower than the temperature of the cooling medium for cooling the discharge cells.

## Patentansprüche

1. Plattenförmiger Ozonerzeuger mit einem Ozonerzeugergehäuse, mit Entladungszellen, die zwischen jeweils zwei aufgeschichteten Kühleinrichtungen vorhanden sind, um durch Umwälzen des Materialgases durch das Innere jeder Entladungszelle Ozonerzeugung auszuführen, einem das Ozonerzeugergehäuse aufnehmenden Druckbehälter und einer Einrichtung zum Einspeisen eines Gases unter Druck, der nahezu derselbe Druck wie der des Materialgases ist, das in jede Entladungszelle des Ozonerzeugergehäuses eingespeist wird, in den Druckbehälter, **dadurch gekennzeichnet, dass** das Innere jeder Entladungszelle des innerhalb des oben genannten Druckbehälters untergebrachten Ozonerzeugergehäuses einen unabhängigen Raum bildet, der gegen das Innere des Druckbehälters isoliert ist, das Materialgas zum Erzeugen von Ozon nur diesem unabhängigen Raum zugeführt wird und das in das Innere des Druckbehälters geleitete Gas unter Druck nicht in diesen unabhängigen Raum eindringen kann.

2. Plattenförmiger Ozonerzeuger nach Anspruch 1, **dadurch gekennzeichnet, dass** das oben genannte Gas unter Druck ein trockenes Gas mit einem Taupunkt unter der Temperatur des Kühlmediums zum Kühlen der Entladungszellen ist.

## Revendications

1. Ozoneur à plaque comprenant un corps générateur d'ozone comportant des cellules de décharge situées chacune entre deux réfrigérants superposés, pour réaliser une ozonisation par la mise en circulation de la matière gazeuse à travers la partie intérieure de chaque cellule de décharge, un récipient sous pression servant de logement audit corps générateur d'ozone, et un moyen pour introduire dans ledit récipient sous pression un gaz sous pression dont la pression est pratiquement la même que celle de la matière gazeuse introduite dans chaque cellule de décharge du corps générateur d'ozone, ledit ozoneur étant caractérisé en ce que la partie intérieure de chaque cellule de décharge du corps générateur d'ozone disposé à l'intérieur du récipient sous pression mentionné ci-dessus forme un espace indépendant isolé de la partie intérieure du récipient sous pression, en ce que la matière gazeuse destinée à produire de l'ozone est introduite uniquement dans cet espace indépendant, et en ce que le gaz sous pression introduit dans la partie intérieure du récipient sous pression ne peut pénétrer dans cet espace indépendant.

2. Générateur d'ozone à plaques selon la revendication 1, caractérisé en ce que le gaz sous pression mentionné cidessus est un gaz sec ayant un point de rosée inférieur à la température de l'agent de refroidissement destiné à refroidir les cellules de décharge.
